**Europäisches Patentamt**

**European Patent Office**

**Office européen des brevets**

(11) Veröffentlichungsnummer: **0 134 428**
**B1**

## (12) EUROPÄISCHE PATENTSCHRIFT

(45) Veröffentlichungstag der Patentschrift:
**27.01.88**

(21) Anmeldenummer: **84106715.0**

(22) Anmeldetag: **13.06.84**

(51) Int. Cl.⁴: **G 11 B 7/08**

(54) Lesevorrichtung zum optischen Abtasten von auf einem bewegten plattenförmigen Träger aufgezeichneten Informationen.

(30) Priorität: **09.07.83 DE 3324861**

(43) Veröffentlichungstag der Anmeldung:
**20.03.85 Patentblatt 85/12**

(45) Bekanntmachung des Hinweises auf die Patenterteilung:
**27.01.88 Patentblatt 88/4**

(84) Benannte Vertragsstaaten:
**BE CH FR GB IT LI LU NL**

(56) Entgegenhaltungen:
**EP - A - 0 090 379**
**DE - A - 2 611 617**
**DE - A - 2 918 919**

**JOURNAL OF SCIENTIFIC INSTRUMENTS (Journal of Physics E), 1968, Serie 2, Band 1 R.F. EDGAR "The piezoelectric control of spring strip mounts" Seite 352 PHILIPS TECHNICAL REVIEW, Band 40, 1982, No. 6, Eindhoven M.G. CARASSO et al. "The Compact Disc Digital Audio System" Seiten 150-155**

(73) Patentinhaber: **Deutsche Thomson-Brandt GmbH, Hermann-Schwer-Strasse 3 Postfach 2060, D-7730 Villingen-Schwenningen (DE)**

(72) Erfinder: **Kurz, Arthur, Jurastrasse 5, D-7730 VS-Pfaffenweiler (DE)**
Erfinder: **Kühn, Hans-Robert, Haydnweg 9, D-7742 St. Georgen (DE)**

# Beschreibung

Die Erfindung betrifft eine Lesevorrichtung der im Oberbegriff des Hauptanspruchs angegebenen Art.

Solche Lesevorrichtungen, auch kurz optische Abtaster genannt, dienen dem Auslesen von Audio- und/oder Video-Informationen, die auf einer Audio- bzw. Videoplatte gespeichert sind. Sie sind grundsätzlich auch zum Auslesen anderer optisch lesbarer Daten für die Datenverarbeitung geeignet. Das Prinzip der Speicherung und des Auslesens optisch lesbarer Daten ist allgemein erläutert in Philips Technical Review, Band 40, Nr. 6, 1982, Seiten 151–155.

Als Datenträger werden üblicherweise plattenförmige, rotierende Aufzeichnungsträger, sogenannte Bildspeicher- oder Videoplatten verwendet. Anwendbar sind jedoch auch andere Speichermedien, soweit diese eine lichtreflektierende Fläche zur Speicherung optisch lesbarer Daten aufweisen.

Die Lesevorrichtung besteht im wesentlichen aus einem Abtastkopf mit einer Lichtquelle, in der Regel einem Laserlicht erzeugenden Halbleiter, sowie einer Optik, welche ein oder mehrere Lichtflecke auf der Trägerfläche erzeugt. Der Abtastkopf weist ferner Mittel, z.B. Strahlenteiler, zur Trennung des reflektierten Lichtes vom ausgesendeten Licht sowie Detektionselemente zur Umwandlung des reflektierten Lichtes in elektrische Grössen auf.

Da die Spurendichte ausserordentlich hoch ist, muss der Abtastkopf der Spur mit grosser Präzision, nämlich einer Toleranz von ± 0,1 µm, der aufgezeichneten Spur folgen. Diese Genauigkeit ist durch mechanische Präzision nicht erreichbar, da allein die durch Exzentrizität des Aufzeichnungsträgers und des Wiedergabegerätes bedingten Abweichungen ein mehrfaches des oben angegebenen Toleranzbereiches (bis zu 300 µm) betragen.

Es sind darum Regeleinrichtungen notwendig, welche den Abtastkopf gesteuert von der aufgezeichneten Spur nachführen.

Es ist bekannt, zur Nachführung des den Abtastkopf tragenden Armes in grösseren Schritten eine Grobsteuerung sowie zur Nachführung des verschwenkbar am Arm gelagerten Kopfes in kleineren Schritten eine Feinsteuerung vorzusehen. Hierdurch werden die bei der Feinsteuerung zu bewegenden effektiven Massen klein gehalten, wodurch eine rasche Nachregelung ermöglicht wird.

Wenn die Auslenkung des nachgeführten Abtastkopfes einen vorgegebenen Schwellwert übersteigt, erfolgt eine Umschaltung von Fein- auf Grobsteuerung.

Bei einem bekannten Prinzip, bei welchem der Abtastkopf in einer definierten Mittellage gehalten und gegen die rückstellende Wirkung einer Elastizität ausgelenkt wird, ist ein Mass für den Schwellwert der Maximalwert des elektrischen Stromes, welche die Spule für den Radial-Feinantrieb durchfliesst.

Bei einer Anordnung dieser Art können im Regelkreis auftretende schmale Impulse den Schwellwert zur Einschaltung des Grobantriebes bereits überschreiten, obwohl wegen der geringen Impulsbreite und bedingt durch die mechanische Trägheit des Abtastkopfes letzterer noch nicht den mechanischen Schwellwert für die Umschaltung von Feinantrieb auf Grobantrieb erreicht hat. Um dies zu vermeiden, müssen derartige Impulse unterdrückt, z.B. mittels eines Tiefpassfilters von der Schwellwert-Einrichtung ferngehalten werden. Auf der anderen Seite dürfen Impulse, die einer tatsächlichen Radial-Fehlerabweichung des Lichtfleckes gegenüber der Spur entsprechen, nicht durch derartige Tiefpassfilter beeinflusst werden. Folglich muss bei derartigen Schwellwerteinrichtungen ein Kompromiss zwischen Unterdrückung von Störgrössen und der Übertragung gewünschter Korrektursignale getroffen werden.

Dieser Kompromiss braucht nicht eingegangen zu werden, wenn die tatsächliche Abweichung des Abtastkopfes von der Soll-Lage oder einer Referenzlage ermittelt wird. Bei Analog-Plattenspielern (z.B. Type SL3 oder SL5 der Fa. Technics) wird die Abweichung des Tonabnehmers unmittelbar mittels einer Lichtschrankenanordnung festgestellt, bei welcher am beweglichen Tonarm eine Blende angebracht ist, welche sich im Lichtweg zwischen einer Lichtquelle und einem 2-Segment-Fotoelement befindet. Die Lichtblende und die Fotoelemente sind so angeordnet, dass die Segmente bei Abweichung des Tonabnehmers von der Referenzlage unterschiedlich stark beleuchtet werden. Aus den beiden elektrischen Signalen der Fotoelemente lässt sich ein Regelsignal zur radialen Lagekorrektur des Tonabnehmers ermitteln. Im Regelkreis auftretende Impulse, welche eine Bewegung des Tonabnehmers nicht zur Folge haben, werden anders als bei der oben erläuterten Anordnung nicht ermittelt und können folglich nicht zu einer fehlerhaften Korrektur führen.

Eine derartige Lichtschrankenanordnung ist wegen der erforderlicehn Präzision relativ aufwendig und wegen der Gefahr unterschiedlicher Verschmutzung oder Alterung der Fotoelement-Segmente auch störanfällig. Ausserdem kann diese Lichtschrankenanordnung selbst nicht dazu benutzt werden, gewünschte Auslenkungen des Abtastkopfes gesteuert hervorzurufen.

Mit der vorliegenden Erfindung soll für einen Abtastkopf der erläuterten Art eine Schwellwerteinrichtung geschaffen werden, welche einerseits gegen Störimpulse und andererseits gegen Verschmutzung oder Alterung unempfindlicher ist.

Die Lösung der vorliegenden Erfindung geht von einer aus der DE-A-29 18 919 bekannten Lesevorrichtung aus, deren für die vorliegende Erfindung notwendige Merkmale im Oberbegriff des Hauptanspruchs im einzelnen angegeben sind.

Bei dieser bekannten Lesevorrichtung erzeugt die Auslenkung des Abtastkopfes in einem piezoelektrischen Wandler, welcher im Kraftfluss zwi-

schen Abtastkopf und einem einseitig gehaltenen elastisch federnden Rückstellglied, nämlich einer einerends eingespannten Blattfeder, angeordnet ist, ein der Auslenkung des Abtastkopfes entsprechendes Signal, welches bei dieser Anordnung der dynamischen Rückkopplung für die Servospursteuerung dient.

Nach dem erfindungsgemässen Vorschlag, wie er im Kennzeichen des Hauptanspruchs definiert ist, wird dieser elektrodynamische Wandler als Schwellwerteinrichtung eingesetzt, welche eine Umschaltung von Fein- auf Grobsteuerung bewirkt, wenn die Auslenkung des nachgeführten Abtastkopfes einen vorgegebenen Schwellwert übersteigt. Hierbei wird aus der elektrischen Ausgangsgrösse des Wandlers die die Umsteuerung von Fein- auf Grobsteuerung bewirkende Steuergrösse abgeleitet.

Eine derartige Schwellwerteinrichtung ist weitgehend unempfindlich gegen Störimpulse. Soweit piezoelektrische Bauelemente als elektromechanische Wandler verwendet werden, scheiden Fehler wegen Verschmutzung und Alterung nahezu vollständig aus.

Bei einem bevorzugten Ausführungsbeispiel, bei welchem der Abtastkopf mittels beidseitig angeordneter Federelemente in definierter Lage zwischen zwei Halterungen gehalten wird, ist zwischen jedem der beiden Federelemente und der jeweiligen Halterung ein eigener Wandler angeordnet. Die Ausgangsspannungen der beiden Wandler werden hierbei einer Differenzschaltung zugeführt, welche die Steuergrösse aus den beiden Ausgangsspannungen herleitet.

Für die Realisierung der Erfindung eignen sich vorzugsweise piezoelektrische Wandler, die in Form von einfachen Longitudinal-Schwingern ausgebildet sind. Bei Auslenkungen des Feintriebs entstehen in den beidseitig angeordneten Wandlern Druck- bzw. Zugkräfte, welche entgegengesetzt gerichtete Piezospannungen zur Folge haben, die in der oben erwähnten Differenzschaltung zur Ermittlung der Steuergrösse miteinander verknüpft werden.

Bei dieser Anordnung kann in Weiterbildung der Erfindung nur einer der beiden Wandler zur Bestimmung der radialen Abweichung des Abtastkopfes benutzt werden, während der andere Wandler als Schwingungserzeuger dient. Die Ausgangsspannung des erstgenannten Wandlers muss in diesem Fall mit einer der Mittellage des Abtastkopfes entsprechenden Referenzspannung verglichen werden. Dem zweiten, als Schwingungserzeuger oder Sender dienenden Wandler können definierte elektrische Kontrollsignale zugeführt werden, welche den Abtastkopf radial auslenken. Durch Zusammenwirken von Schwingungserzeuger bzw. Sender und Empfangswandler könnnen evtl. entstehende Asymmetrien des optischen Systems kompensiert werden.

Diese Anordnung eignet sich dazu, dem Abtastkopf eine niederfrequente Schwingung mit einer Frequenz von 600 Hz und einer Amplitude von ± 0,05 µm zu überlagern wie dies in der eingangs zitierten Veröffentlichung Philips Technical Review, Seite 154 erläutert ist. Die niederfrequente Kontrollschwingung wird hierbei mittels des vorhandenen Mechanismus für den Feinantrieb erzeugt. Diese Verfahrensweise hat den Nachteil, dass einerseits der vergleichsweise empfindliche Feinantrieb mit verschiedenen Steuersignalen beaufschlagt wird. Andererseits gehen auch in die Kontrollschwingungen Fehler ein, welche durch die Charakteristik des Feintriebs bedingt sind.

Diese Nachteile hat die erfindungsgemässe Lösung nicht, bei welcher Antrieb und Fehlerkorrektur voneinander getrennt sind.

Der Gegenstand der Erfindung sowie weitere an dieser Stelle noch nicht erläuterte Merkmale und Massnahmen sind nachstehend anhand von Ausführungsbeispielen, die zeichnerisch dargestellt sind, im einzelnen erläutert. In den Zeichnungen zeigen:

Fig. 1 perspektivische Darstellung eines erfindungsgemäss ausgebildeten Abtastkopfes nach einem ersten Ausführungsbeispiel,

Fig. 1a perspektivische Darstellung eines piezoelektrischen Wandlers, bei welchem Schwingungserzeuger und Empfänger zu einer Einheit kombiniert sind,

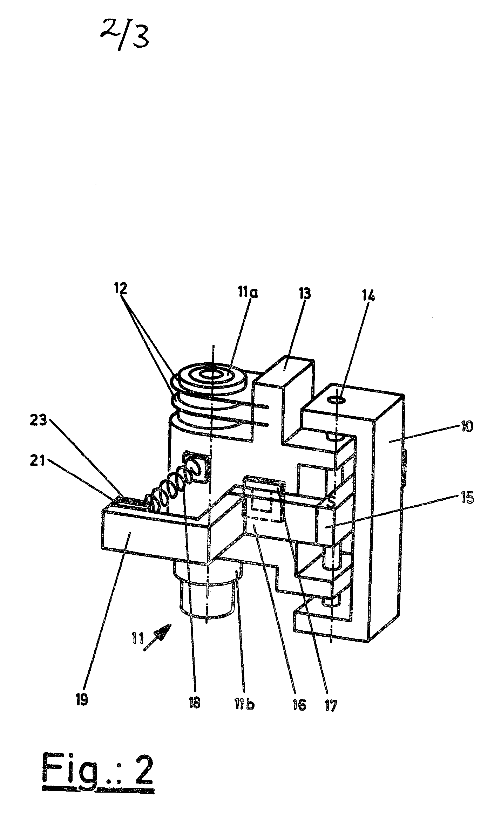

Fig. 2 perspektivische Darstellung des Abtastkopfes gemäss Figur 1 in einer gegenüber dieser um 90° gedrehten Ansicht,

Fig. 3 perspektivische Darstellung eines erfindungsgemäss gestalteten Abtastkopfes nach einem zweiten Ausführungsbeispiel.

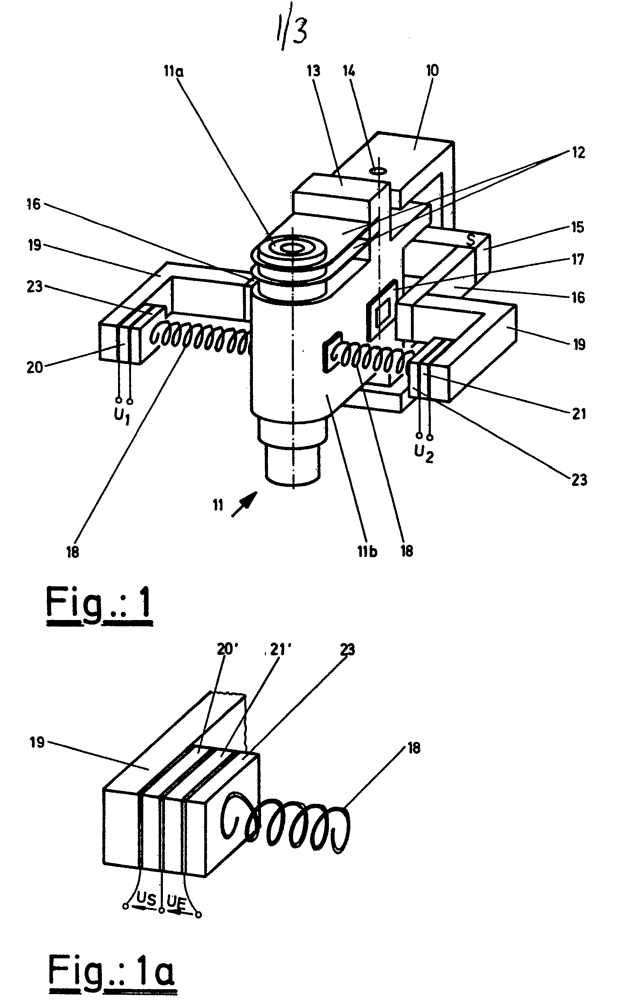

Die perspektivische Darstellung in Fig. 1 zeigt eine Abtastvorrichtung, welche mittels eines Trägers 10 an einem zeichnerisch nicht dargestellten Arm oder Schlitten angebracht ist, der zum Zwecke der Grobsteuerung in grösseren Schritten bei der Abtastung des Informationsträgers verstellbar ist. Aus der Zeichnung im Detail erkennbar sind die für den Feinantrieb und die Lageregelung des Abtastkopfes mit der Erfindung vorgeschlagenen Elemente.

Der dem Auslesen der Information dienende Abtastkopf 11 birgt in seinem Inneren die Lichtquelle und die Optik zur Erzeugung des in der Zeichnung nach oben austretenden Lichtbündels und damit des Lichtfleckes auf der Trägerfläche. Im Abtastkopf untergebracht ist ferner ein Strahlenteiler zur Trennung des reflektierten Lichtes vom ausgesendeten Lichtes sowie eine Baugruppe, bestehend aus Halbleitersegmenten, welche das reflektierte Licht in elektrische Signale umwandeln. Das optische System 11a des Abtastkopfes 11 ist über Blattfedern 12 mit dem Kopfträger 13 axial verstellbar verbunden. Mittels einer nicht dargestellten, vorzugsweise elektromagnetischen Einrichtung lässt sich das optische System 11a zur Fokussierung des Lichtfleckes auf der Trägerfläche in axialer Richtung verstellen. Der Kopfträger 13, mit welchem das Gehäuse 11b des Abtastkopfes 11 fest verbunden ist, ist um die Drehachse 14 mittels des nachstehend noch erläuterten Feinantriebs verschwenkbar. Dieser Feinantrieb besteht im wesentlichen aus einem magnetischen Kreis mit dem am Träger 10 angebrachten Permanentmagneten 15, an dessen Enden vorgesehenen Polschuhen 16 und der im rückwärtigen Gehäuseteil 11b untergebrachten Spule 17. Je nach Bestromung der Spule 17 lässt sich der Abtastkopf gegen die Wirkung elastisch federnder Rückstellglieder, nämlich der Federn 18, verschwenken. Die symmetrisch ausgebildeten und vorgespannten Federn 18 sind zwischen den Halterungen 19 und dem Abtastkopfgehäuse 11b eingespannt. Zwischen den Enden der Halterungen 19 und den Federn 18 sind druck- bzw. zugempfindliche piezoelektrische Wandler 20 und 21 vorgesehen. Zur Erzeugung gleichmässiger Flächendrücke und Festlegung stützen sich die Federn 18 über Druck- und Befestigungsplatten 23 auf den piezoelektrischen Wandlern ab. Bei symmetrischer Positionierung des Abtastkopfes werden durch Druckeinwirkung mittels der piezoelektrischen Wandler 20 und 21 gleiche Ausgangsspannungen $U_1$ und $U_2$ erzeugt. Bei Auslenkung des Abtastkopfes aus einer Mittellage verändern sich die Druckbelastungen der Wandler 20 und 21, was unterschiedliche Ausgangsspannungen $U_1$ und $U_2$ zur Folge hat. Die Ausgangsspannungen sind also ein Mass für die radiale Auslenkung des Kopfes.

Durch Anlegen einer Spannung, z.B. der Spannung $U_1$, an den Wandler 20 lässt sich eine willkürliche Dickenänderung des Wandlers und damit eine willkürliche Auslenkung des Kopfes 11 erreichen. Diese Eigenschaft wird in Weiterbildung der Erfindung dazu ausgenutzt, den Abtastkopf und damit das optische System gesteuert auszulenken.

Die Wandler 20 und 21, die nach Fig. 1 in zwei Einzelelemente aufgeteilt sind, können auch zu einem kompakten Element miteinander kombiniert werden, wie dies in Fig. 1A angedeutet ist. Bei dieser Anordnung sind zwei Wandler 20' und 21' zu einem kompakten Element kombiniert, das zwischen Halterung 19 und Druck- und Befestigungsplatte 23 vorgesehen ist. An den Wandler 20' möge eine Spannung $U_S$ entweder als Korrekturgrösse oder als Wobbelspannung angelegt werden, während die am Wandler 21' entstehende Spannung $U_E$ als Steuergrösse ausgenutzt werden kann.

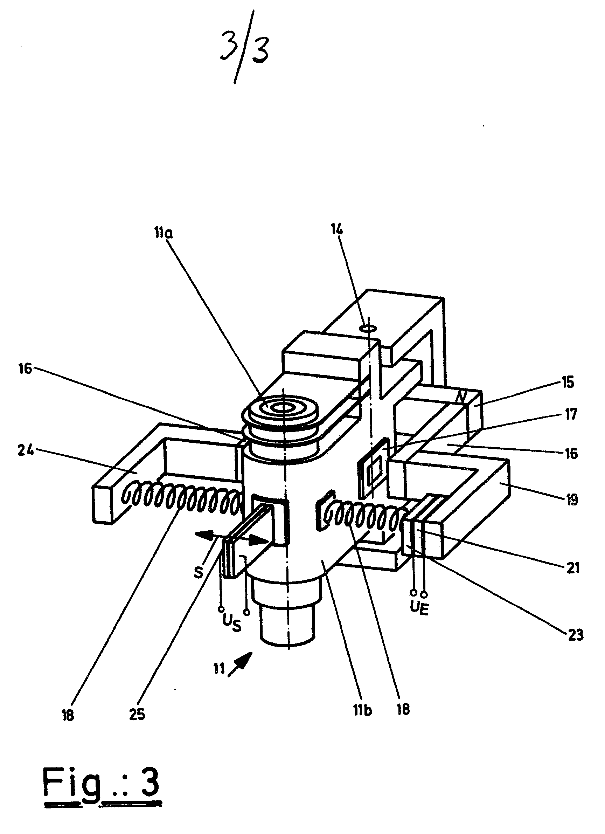

Eine Abwandlung des Abtastkopfes gem. Fig. 1 ist in Fig. 3 dargestellt. Gleiche Teile sind mit gleichen Ziffern wie in Fig. 1 bezeichnet. Anstelle des Wandlers 20 bei dem Ausführungsbeispiel in Fig. 1 ist bei demjenigen gemäss Fig. 3 unmittelbar am Gehäuse 11b des Abtastkopfes ein piezoelektrischer Biegeschwinger 25 mit einem Ende fest angebracht. Das andere Ende des Biegeschwingers 25 ist frei und kann bei Anlegen einer Wechselspannung $U_S$ in Richtung des Doppelpfeiles S in Biegeschwingungen versetzt werden. Da der Abtastkopf 11 zwischen den Federn 18 elastisch gelagert ist, wird er als Reaktion auf die Schwingungen S gleichfalls in Schwingungen versetzt werden. Der Abtastkopf 11 ist mittels des Kopfträgers 13 um die Achse 14 gegen die Wirkung der Federn 18 verschwenkbar angeordnet, wobei auf den Kopfträger 13 und damit den Abtastkopf 11 ein Feinantrieb zur radialen Auslenkung einwirkt. Beim Ausführungsbeispiel nach Fig. 1 und 3 ist dieser Feinantrieb realisiert durch den elektromagnetischen Kreis 15, 16 und 17.

Die Schwellwerteinrichtung zur Umschaltung von Feinsteuerung auf Grobsteuerung ist nicht zeichnerisch dargestellt. Als Detektionselement dient eine an sich bekannte Anordnung eines 4-Segment-Fotoelementes, welches sowohl die Data-Informationen als auch die Fehlersignale ausliest.

Figurenlegende
10 Träger
11 Abtastkopf
11a optisches System
11b Gehäuse
12 Blattfedern
13 Kopfträger
14 Drehachse
15 Permanentmagnet
16 Polschuhe
17 Spule
18 elastisch-federnde Rückstellglieder, Federn
19 Halterungen
20 piezoelektrische Wandler, Schwingungserzeuger
21 piezoelektrischer Wandler, Empfänger
23 Druck- und Befestigungsplatte
24 Befestigungsarm
25 piezoelektrischer Biegeschwinger
S Schwingungsrichtung des Biegeschwingers 25

Patentansprüche

1. Lesevorrichtung zum optischen Abtasten von auf der Licht reflektierenden Fläche eines bewegten plattenförmigen Trägers aufgezeichneten Informationen, bestehend aus einem an einem Arm verschwenkbar gelagerten Abtastkopf mit einer Lichtquelle, einer Optik zur Erzeugung wenigstens eines Lichtfleckes auf der Trägerfläche, einem Mittel zur Trennung des reflektierten Lichtes vom ausgesendeten Licht, Detektionselementen zur Umwandlung des reflektierten Lichtes in elektrische Grössen, ferner bestehend aus einer Grobsteuerung zur Nachführung des Armes in grösseren Schritten sowie einer Feinsteuerung zur Nachführung des verschwenkbar gelagerten Kopfes gegen die Wirkung eines elastisch federnden Rückstellgliedes in kleineren Schritten, sowie mindestens einem elektromechanischen Wandler, vorzugsweise einem piezoelektrischen Wandler, welcher im Kraftfluss zwischen Abtastkopf, dem elastisch federnden Rückstellgied und einer gegenüber dem Abtastkopf feststehenden Halterung angeordnet ist, dadurch gekennzeichnet, dass der elektromechanische Wandler (21) als Schwellwerteinrichtung dient, welche eine Umschaltung von Fein- auf Grobsteuerung bewirkt, wenn die Auslenkung des nachgeführten Abtastkopfes (11) einen vorgegebenen Schwellwert übersteigt, wobei aus seiner elektrischen Ausgangsgrösse, vorzugsweise der Ausgangsspan-

nung ($U_2$), die die Umsteuerung von Fein- auf Grobsteuerung bewirkende Steuergrösse abgeleitet wird.

2. Lesevorrichtung nach Anspruch 1, deren Abtastkopf mittels beidseitig angeordneter Federelemente in definierter Mittellage zwischen zwei Halterungen gehalten wird, dadurch gekennzeichnet, dass zwischen jedem der beidem Federelemente (18) und der jeweiligen Halterung (19) ein Wandler (20, 21) angeordnet ist und dass die Ausgangsspannungen ($U_1$, $U_2$) der Wandler (20, 21) zur Erzeugung der Steuergrösse in einer Differenzschaltung miteinander verknüpft werden.

3. Lesevorrichtung nach Anspruch 1 und 2, dadurch gekennzeichnet, dass ein mit einem niederfrequenten Kontrollsignal betriebener Wandler (20) als Schwingungserzeuger und der zweite Wandler (21) als Empfänger dient, dessen Ausgangsspannung ($U_2$) mit einer der Mittellage entsprechenden Referenzspannung verglichen wird und zur Amplitudennachregelung des niederfrequenten Kontrollsignales dient.

4. Lesevorrichtung nach Anspruch 3, dadurch gekennzeichnet, dass das Kontrollsignal eine Frequenz von ca. 600 Hz besitzt und eine Auslenkung des Abtastkopfes (11) im Bereich des Lichtfleckes von ± 0,05 µm bewirkt.

5. Lesevorrichtung nach Anspruch 3 oder 4, dadurch gekennzeichnet, dass jeder der beiden Piezowandler jeweils aus zwei Einzelelementen (20′, 21′, Fig. 1a) gleichen Aufbaus besteht und dass jeweils eines der Einzelelemente als Schwingungserzeuger (20′) und das andere als Empfänger (21′) geschaltet ist.

6. Lesevorrichtung nach Anspruch 3, dadurch gekennzeichnet, dass zwischen einem der beiden Federelemente (18, Figur 3) ein Piezowandler (21) als Empfänger in Form eines Longitudinal-Schwingers angeordnet ist und dass am Abtastkopfgehäuse (11b) als Schwingungserzeuger einseitig ein Piezowandler (25) in Form eines Biegeschwingers angebracht ist, mit welchem der Abtastkopf (11) in Radialschwingungen versetzbar ist.

**Revendications**

1. Dispositif de lecture pour la lecture optique de données enregistrées sur la surface réfléchissant la lumière, d'un support mobile en forme de disque, comportant une tête de lecture disposée de manière orientable sur un bras, un système d'optique destiné à produire au moins une tache de lumière à la surface du support, un moyen des séparation de la lumière réfléchie et de la lumière émise, et des éléments de détection pour la transformation de la lumière réfléchie en grandeurs électriques, comportant d'autre part, une commande grossière pour le guidage du bras par pas plus grands ainsi qu'une commande fine pour le guidage par pas plus petits, de la tête qui est montée pivotante à l'encontre des effets d'un élément de rappel élastique, et au moins un transformateur électromécanique, de préférence un transformateur piézoélectrique, disposé dans le flux des forces entre la tête de lecture, l'élément de rappel élastique et une fixation immobile par rapport à la tête de lecture, caractérisé par le fait que le transformateur électromécanique (21) fonctionne en tant que dispositif à seuil et déclenche le basculement des commandes grossière et fine quand la déviation de la tête de lecture (11) asservie dépasse un seuil donné, tandis que la grandeur de commande occasionnant le basculement de la commande grossière en commande fine est dérivée de sa grandeur électrique de sortie, de préférence de la tension de sortie ($U_2$).

2. Dispositif de lecture selon la revendication 1, dont la tête de lecture est maintenue en position médiane définie, entre deux fixations par ressort disposées des deux côtés, caractérisé par le fait qu'entre chacun des deux ressorts (18) et leur fixation respective, un transformateur (20, 21) est disposé et que les tensions de sortie ($U_1$, $U_2$) des transformateurs (20, 21) sont mutuellement combinées dans un circuit différientiel afin de produire la grandeur de commande.

3. Dispositif de lecture slon les revendications 1 et 2, caractérisé par le fait qu'un transformateur (20), actionné par un signal de contrôle à basse fréquence, sert de générateur d'oscillations et que le deuxième transformateur (21) sert de récepteur, dont la tension de sortie ($U_2$) est comparée à une tension de référence correspondant à la position médiane, et qu'il sert à la régulation d'amplitude du signal de contrôle à basse fréquence.

4. Dispositif de lecture selon la revendication 3, caractérisé par le fait que le signal de contrôle a une fréquence d'environ 600 Hz et provoque une déviation de ± 0,05 µm de la tête de lecture (11) dans la zone de la tache lumineuse.

5. Dispositif de lecture selon la revendication 3 ou 4, caractérisé par le fait que chacun des transformateurs piézoélectriques est composé de deux éléments individuels (20′, 21′, figure 1a), de même conception, et que chaque fois l'un des éléments est commuté en tant que générateur d'oscillations (20′) et l'autre comme récepteur (21′).

6. Dispositif de lecture selon la revendication 3, caractérisé par le fait qu'entr'un des ressorts (18, figure 3) et la fixation (19), un transformateur piézoélectrique (21) est disposé en tant que récepteur sous forme d'un oscillateur longitudinal, et qu'un transformateur piézoélectrique (25) est prévu sur un côté comme générateur d'oscillations, sous forme d'oscillateur travaillant en flexion, permettant de mettre la tête de lecture (11) en oscillations radiales.

**Claims**

1. A reading device for optically scanning information recorded on the light reflecting surface or a moving plate-like carrier, comprising a scanning head pivotally mounted on an arm and having a light source, an optical member for producing at least one spot of light on the carrier surface, a means for separating the reflected light from the emitted light, detection elements for converting the reflected light into electrical variables, and further comprising coarse control for tracking the arm in fairly large steps and fine control for tracking the pivotally mounted head contrary to the action of a resiliently sprung reset element in fairly small steps, and at least one electromechanical transducer, preferably a piezoelectric transducer, which is arranged in the flux of force between the scanning head, the resiliently sprung reset element and a mount which is fixed in relation to the scanning head, characterised in that the electromechanical transducer (21) acts as the threshold value device, which switches from fine to coarse control, when deflection of the tracked scanning head (11) has exceeded a predetermined threshold value, in which the control variable which effects the change-over from fine to coarse control is derived from the electrical output quantitiy of the transducer, preferably the output voltage $(U_2)$.

2. A reading device according to claim 1, in which the scanning head is mounted in a defined centre position between two mounts characterised in that a transducer (20, 21) is arranged between each of the two spring elements (18) and its respective mount (19), and that the output voltages $(U_1, U_2)$ from the transducers (20, 21) are linked together in a differential connection in order to produce the control variable.

3. A reading device according to claim 1 and 2, characterised in that a transducer (20) operating with a low frequency monitoring signal is used as a producer of oscillations and the second transducer (21) acts as a receiver, its output voltage $(U_2)$ being compared with a reference voltage which corresponds to the centre position and serving to readjust the amplitude of the low frequency monitoring signal.

4. A reading device according to claim 3, characterised in that the monitoring signal has frequency of approx. 600 Hz and causes the scanning head (11) to deflect in the region of the spot of light by plus or minus $0.05\mu m$.

5. A reading device according to claim 3 or 4, characterised in that each of the two piezotransducers consists of two individual elements (20', 21', Figure 1a) which have the same construction; and that in each case one of the individual elements is connected so as to be the producer of oscillations (20') and the other as the receiver (21').

6. A reading device according to claim 3, characterised in that a piezotransducer (21) is arranged as a receiver, in the form of a longitudinal resonator, between one of the two spring elements (18, Figure 3) and the mounting (19), and that a piezotransducer (25) in the form of a flexural resonator is arranged on one side of the scanning casing (11b) as the producer of oscillations, in which the scanning head (11) can be set in radial vibration by the piezotransducer (25).

## Fig.: 1

## Fig.: 1a

2/3

## Fig.: 2

3/3

Fig.: 3